# EUROPÄISCHE PATENTSCHRIFT

(11) **EP 1 600 408 B1**
(45) Veröffentlichungstag und Bekanntmachung des Hinweises auf die Patenterteilung: **28.11.2007**
(21) Anmeldenummer: 05008691.7
(22) Anmeldetag: 21.04.2005
(51) Int. Cl.: B65G 67/20, B65G 47/90

(54) **Vorrichtung zur Be- und Entladung eines Transportbehälters**
Device for loading and unloading a transport container
Dispositif de chargement et de déchargement de conteneurs de transport

(30) Priorität: 28.05.2004 DE 102004026190
(43) Veröffentlichungstag der Anmeldung: 30.11.2005
(73) Patentinhaber: Deutsche Post AG, 53175 Bonn (DE); Universität Bremen, 28344 Bremen (DE)
(72) Erfinder: Franck, Hermann, 27721 Ritterhude (DE); Echelmeyer, Wolfgang, 27711 Osterholz-Scharmbeck (DE); Lohmann, Jessica, 28205 Bremen (DE); Heckmann, Mark, 28359 Bremen (DE); Strauss, Gerald, 27711 Osterholz-Scharmbeck (DE); Rippe, Julia, 28816 Stuhr (DE); Huhn, Alexander, 28307 Bremen (DE); Litfin, Andre, 27367 Sottrum (DE); Taubald, Nils, 28207 Bremen (DE); Dahlweid, Sven, 28307 Bremen (DE); Haijie, Zhao, 28213 Bremen (DE)
(74) Vertreter: Manasse, Uwe

(56) Entgegenhaltungen:
- DE-U1- 20 202 926
- NL-C2- 1 017 970
- US-A- 5 015 145
- US-A- 5 718 325

## Beschreibung

Die vorliegende Erfindung betrifft eine Vorrichtung zur automatisierten Be- und Entladung eines von wenigstens einer Seite horizontal zugänglichen Transportbehälters mittels eines Be- und Entladeroboters, umfassend einen Teleskopförderer und einen mit einem Fahrgestell ausgestatteten und über selbiges mit dem Teleskopförderer gekoppelten Be- und Entladeroboter.

Eine derartige Vorrichtung ist aus der DE 202 02 926 U1 bekannt. Die bekannte Vorrichtung weist den Nachteil auf, dass sich der Be- und Entladeroboter, wenn überhaupt, nur sehr umständlich gezielt in einen Transportbehälter, wie beispielsweise Transportcontainer, Wechselpritschen und räumlich geschlossene Ladeflächen von Nutzfahrzeugen und Anhängern, einbringen lässt.

Der Erfindung liegt somit die Aufgabe zugrunde, die gattungsgemäße Vorrichtung so weiterzubilden, dass der oben genannte Nachteil beseitigt, zumindest aber gelindert wird.

Erfindungsgemäß wird diese Aufgabe bei der Vorrichtung gemäß der eingangs genannten Art durch die Merkmale des Kennzeichens von Anspruch 1 gelöst.

Insbesondere kann dabei vorgesehen sein, daß das Fahrgestell ein über eine Steuereinrichtung steuerbares Bremssystem aufweist.

Das Fahrgestell kann dabei ohne eigenen Antrieb, das heißt als antriebsloses Fahrgestell, oder aber mit einem eigenen Antrieb zusätzlich zum Antrieb durch den Teleskopförderer versehen sein.

Günstigerweise weist die Plattform eine Grundplatte auf, deren Abmessungen und Gewicht so bemessen sind, dass ein Sechsachs-Knickarmroboter bis zu einem Arbeitsgewicht von ca. 60kg bei voller Belastung standsicher in Betrieb ist. Dazu ist/sind normalerweise ein hohes Gewicht und/oder ein niedriger Schwerpunkt zu wählen. Dies verhindert ein Aufschwingen des Gesamtsystems und bietet Kippsicherheit.

Der Ausdruck "volle Belastung" kann sich auf die Geschwindigkeit und/oder die Drehmomente beziehen.

Günstigerweise sollte die Plattform auch bei Notausschaltung bei 100%-Geschwindigkeit standsicher sein.

Günstigerweise ist die Grundplatte eine in mindestens einer Richtung verschiebbare Lochplatte. Die Lochplatte kann dazu benutzt werden, einen Be- und Entladeroboter festzuschrauben.

Vorteilhafterweise ist die Plattform mit mindestens einem zusätzlichen Gewicht versehen. Dadurch wird ein Aufschwingen des Gesamtsystems noch weiter unterdrückt und die Kippsicherheit noch mehr erhöht.

Vorteilhafterweise ist die Plattform mit vier Rädern bestückt. Dadurch lässt sich die Kippsicherheit erhöhen.

Alternativ kann vorgesehen sein, dass die Plattform mit drei Rädern bestückt ist. Dies kann zum Beispiel auf unebenem Untergrund für einen sicheren Stand der Plattform von Vorteil sein.

Weiterhin ist möglich, dass mindestens eines der Räder mit einer über die Steuereinrichtung steuerbaren Lenkeinrichtung versehen ist.

Gemäß einer besonderen Ausführungsform der Erfindung ist mindestens eines der Räder mit einer über die Steuereinrichtung steuerbaren Antriebseinrichtung versehen. Dadurch ist eine Lenkung des Fahrgestells möglich.

Alternativ kann vorgesehen sein, dass das Bremssystem mindestens eine über die Steuereinrichtung steuerbare Bremseinrichtung zum Abbremsen eines der Räder umfasst. Dadurch ist ebenfalls eine Lenkung des Fahrgestells möglich.

Vorteilhafterweise umfasst die Bremseinrichtung eine aktive Radbremse.

Wiederum ist auch denkbar, dass die Plattform mit Laufketten versehen ist. Durch die Laufketten kann ein besonders sicherer Stand der Plattform erzielt werden.

Insbesondere kann dabei vorgesehen sein, dass mindestens eine der Laufketten mit einer über eine Steuereinrichtung steuerbaren Antriebseinrichtung versehen ist. Dadurch ist ebenfalls eine Lenkung des Fahrgestells möglich.

Alternativ kann vorgesehen sein, dass das Bremssystem mindestens eine über die Steuereinrichtung steuerbare Bremseinrichtung zum Abbremsen einer der Laufketten umfasst. Dadurch ist ebenfalls eine Lenkung des Fahrgestells möglich.

Auch kann vorgesehen sein, dass die Plattform mit einer über die Steuereinrichtung steuerbaren Ansaugeinrichtung zum Ansaugen der Plattform versehen ist. Dies ist für einen besonders sicheren Stand der Plattform vorteilhaft.

Ferner ist denkbar, dass der Be- und Entladeroboter mittels einer festen Verschraubung an der Grundplatte befestigt ist.

Darüber hinaus ist denkbar, dass das Bremssystem mindestens einen absenkbaren Stempel umfasst.

Alternativ kann auch vorgesehen sein, dass das Bremssystem eine Einrichtung zum Ansaugen der Plattform umfasst.

Günstigerweise ist die Steuereinrichtung durch ein Bildverarbeitungssystem gesteuert. Beispielsweise kann auf der Plattform beziehungsweise Grundplatte ein Stativ mit einer darauf angebrachten Bilderkennungseinrichtung, zum Beispiel einem Scanner, vorgesehen sein, deren Bilder mittels des Bildverarbeitungssystems verarbeitet werden, wobei die Verarbeitungsergebnisse als Steuersignale für die Steuereinrichtung zur Steuerung der Bewegung des Fahrgestells und/oder des Be- und Entladeroboters verwendet werden. Hierdurch lässt sich eine Regelung der Position realisieren.

Alternativ ist auch denkbar, dass die Steuereinrichtung durch mindestens einen Näherungssensor gesteuert ist. Hierdurch lässt sich eine Regelung der Position realisieren.

Wiederum alternativ kann ist denkbar, dass die Steuereinrichtung durch ein Kreiselsystem gesteuert ist. Hierdurch lässt sich eine Regelung der Position realisieren.

Vorteilhafterweise ist die Steuereinrichtung zur Durchführung einer Nachlaufsteuerung ausgebildet.

Schließlich kann bei der Vorrichtung eine Verriegelungseinrichtung zur Verriegelung der Querstange in den Halterungen vorgesehen sein.

Der Erfindung liegt die überraschende Erkenntnis zugrunde, dass durch die spezielle Gestaltung der Kupplung ein Antrieb und damit eine Bewegung sowie Lenkung des Fahrgestells und damit ein gezieltes Einbringen eines Be- und Entladeroboters ermöglicht wird.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist. Dabei zeigt:
- Figur 1: schematisch eine Draufsicht auf eine Vorrichtung gemäß einer besonderen Ausführungsform der Erfindung;
- Figur 2: eine Detailansicht eines Fahrgestells der Vorrichtung von Figur 1 von oben;
- Figur 3: eine Ansicht des Fahrgestells von Figur 2 von vorne;
- Figur 4: eine Ansicht des Fahrgestells von Figur 2 von einer Seite;
- Figur 5: Details einer aktiven Radbremse der Vorrichtung von Figur 1 in Ansicht von vorne;
- Figur 6: Details eines Rades der Vorrichtung von Figur 1 in Seitenansicht; und
- Figur 7: Details der Kupplung der Vorrichtung von Figur 1 in Draufsicht.

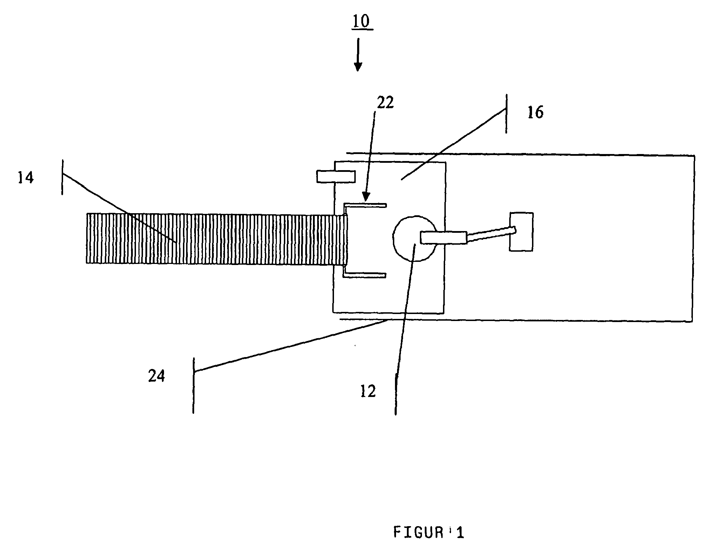

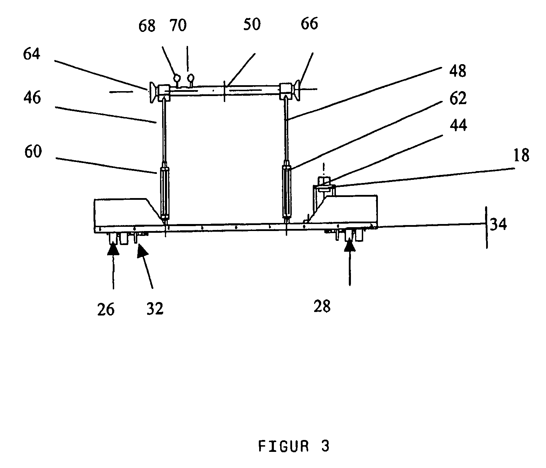

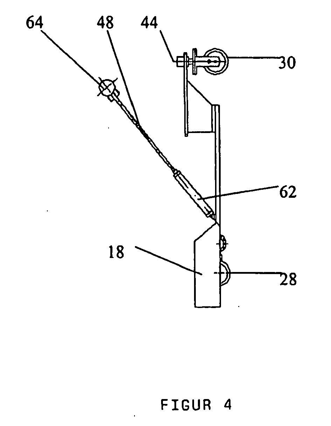

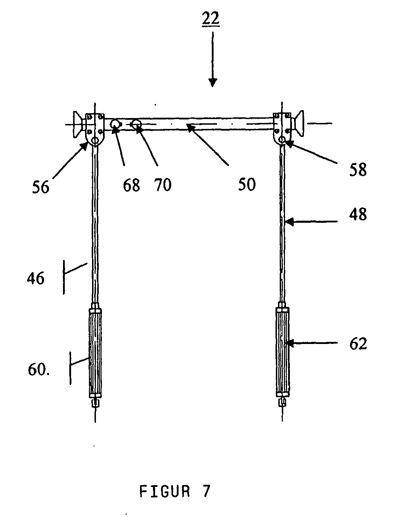

Nachfolgend wird eine Vorrichtung 10 zur automatisierten Be- und Entladung eines von wenigstens einer Seite horizontal zugänglichen Transportbehälters 24 mittels eines Be- und Entladeroboters 12 unter Bezugnahme auf die Figuren 1 bis 7 beschrieben.

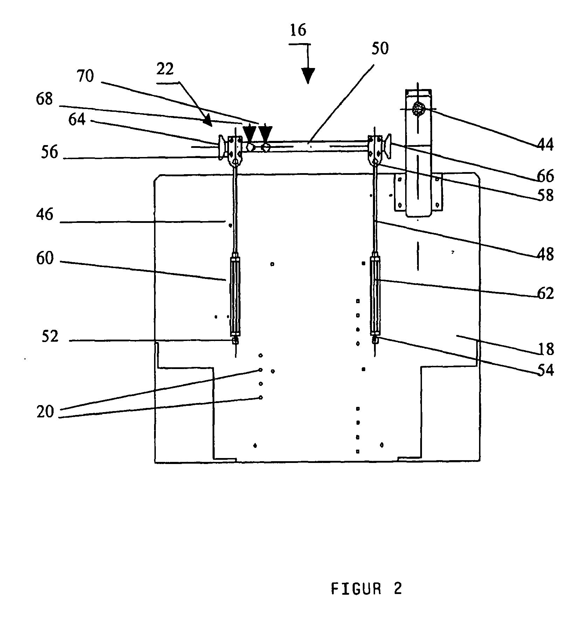

Die Vorrichtung 10 umfasst einen Teleskopförderer 14 und den mit einem Fahrgestell 16 ausgestatteten und über selbiges mit dem Teleskopförderer 14 gekoppelten Be- und Entladeroboter 12. Das Fahrgestell 16 weist eine Plattform 18 auf, die eine Grundplatte umfasst. Die Grundplatte kann beispielsweise aus Stahl, Aluminium, Titanlegierungen oder auch Beton bestehen, wobei jedoch auch eine Sandwich-Bauweise aus einer Kombination verschiedener Materialien möglich ist. Sie weist ein hohes Gewicht und einen niedrigen Schwerpunkt auf. Auf der Plattform 18 ist der Be- und Entladeroboter 12 mittels Schrauben (nicht gezeigt) in Gewindebohrungen, von denen zwei durch das Bezugszeichen 20 in Figur 2 gekennzeichnet sind, befestigt. Bei dem Be- und Entladeroboter 12 handelt es sich um einen handelsüblichen Sechsachs-Knickarmroboter.

Auf der Plattform 18 ist ebenfalls ein Stativ (nicht gezeigt) mit einem darauf befestigten Scanner (nicht gezeigt) befestigt. Der Scanner dient zur Bilderkennung. Hierzu werden die Bilder vom Scanner mittels eines nicht gezeigten Bildverarbeitungssystems verarbeitet und die Verarbeitungsergebnisse zur Ansteuerung einer nicht gezeigten Steuereinrichtung verwendet.

Der Be- und Entladeroboter ist über eine lösbare Kupplung 22 zwischen der Plattform 18 und dem Teleskopförderer 14 mit dem Teleskopförderer 14 gekoppelt.

In Figur 1 befindet sich das Fahrgestell 16 bereits in einem Transportbehälter 24 in Form eines Containers.

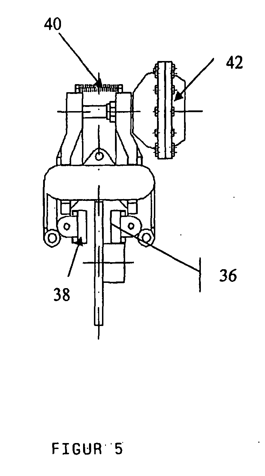

Die Plattform 18 weist drei Räder auf, von denen sich zwei 26 und 28 im Abstand an der zum Transportbehälter 24 zeigenden Längsseite der Plattform 18 befinden und sich ein Rad 30 an der zum Teleskopförderer 14 zeigenden Längsseite der Plattform 18 seitlich vom Teleskopförderer 14 befindet. Die Räder 26 und 28 sind jeweils mit einer aktiven Radbremse 32 beziehungsweise 34 ausgestattet, die in Figur 5 im Detail gezeigt ist. Die aktiven Radbremsen 32 und 34 weisen jeweils eine Bremsscheibe 36 und eine Bremszange 38 auf. Die Bremszangen 38 werden jeweils von einer Feder 40 an der Bremsscheibe 36 festgesetzt. Über einen Pneumatikzylinder 42 lässt sich die jeweilige Bremszange 38 lösen.

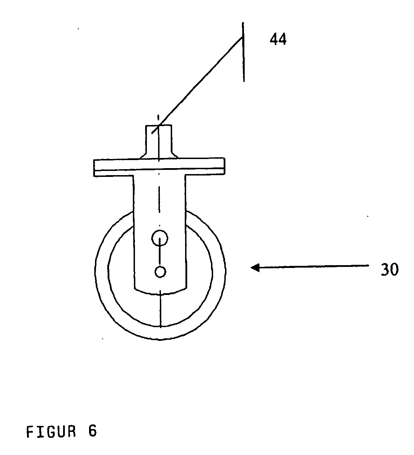

Das Rad 30 ist lenkbar gestaltet. Dazu ist es drehbar gelagert und weist es einen Ansatzpunkt für eine Hebelstange (nicht gezeigt) beziehungsweise einen E-Motor (nicht gezeigt) auf (siehe Figur 6). Bei Verwendung einer Hebelstange wird das Prinzip einer Ruderpinne benutzt.

Wie sich aus den Figuren 2 bis 4 ergibt, weist die Kupplung 22 zwei zueinander parallele Zug-Druckstangen 46 und 48 auf, deren jeweiliges eines Ende mit der Plattform 18 lösbar verbunden ist und deren jeweiliges anderes Ende mit einer zu den Zug-Druckstangen 46 und 48 quer verlaufenden Querstange 50 verbunden ist. Die Verbindungen mit der Plattform 18 und mit der Querstange 50 sind jeweils beweglich mit Vertikalgelenken 52 und 54 sowie Horizontalgelenken 56 und 58 ausgeführt. Die Zug-Druckstangen 46 und 48 umfassen jeweils eine über eine Steuereinrichtung (nicht gezeigt) steuerbar längenverstellbare Teleskopstange 60 beziehungsweise 62. In die Enden der Querstange 50 ist jeweils eine Verbindungshülse (nicht gezeigt) eingeschraubt. Die Verbindungshülsen werden beim Ankuppeln von Schließstücken 64 und 66 aufgenommen. Gleichzeitig mit dem Ankuppeln rasten Verriegelungsstangen (nicht gezeigt) in die Schließstücke 64 und 66 ein. Die Schließstücke 64 und 66 bilden den Kernmechanismus der Verriegelung der Kupplung 22. Dazu ist an beiden Seiten des Teleskopförderers 14 eine Halterung (nicht gezeigt) für die Kupplung 22 zur Befestigung der Schließstücke 64 und 66 angebracht. Die Verriegelungsstangen (nicht gezeigt) sind in der Querstange 50 enthalten und werden durch eine Druckfeder (nicht gezeigt) auseinander gedrückt, wodurch sie in die Schließstücke 64 und 66 einschnappen und eine formschlüssige Verbindung herstellen. Dadurch wird ein ungewolltes Lösen der Kupplung 22 verhindert. Kugelknöpfe 68 und 70 mit -bolzen dienen zur Handbetätigung für das Entriegeln der Verriegelungsstangen.

Die in Figuren 1 bis 7 gezeigte Vorrichtung kann wie folgt realisiert und eingesetzt werden:

Beispielsweise ein Gabelstapler (nicht gezeigt) positioniert das Fahrgestell 16 vor der Öffnung des Transportbehälters 24. Die aktiven Radbremsen 32 und 34 befinden sich in betätigtem Zustand, das heißt sind bei nicht angeschlossener Druckluftleitung angezogen und verhindern selbst bei unebenem Boden ein Wegrollen des Fahrgestells 16.

Als nächstes wird die Kupplung 22, die auch als Schnellkupplung bezeichnet werden kann, an den Teleskopförderer 14 angekoppelt. Durch die Teleskopstangen 60 und 62, die sich im drucklosen Zustand von Hand bewegen lassen, ist selbst das Ankuppeln bei ungenauer Positionierung des Fahrgestells 16 beziehungsweise Teleskopförderers 14 einfach möglich. Danach werden Versorgungsleitungen, wie zum Beispiel Strom- und Druckluftversorgungsleitungen, angeschlossen.

Dann beginnt der automatisierte Entladevorgang. Die Bilderkennungseinrichtung (nicht gezeigt) übermittelt Positionsdaten des Fahrgestells 16 und des Laderaumes des Transportbehälters 24 an die Steuereinrichtung (nicht gezeigt). Dann wird Druckluft in den Pneumatikzylinder 42 gegeben, wodurch das Fahrgestell 16 bewegungsfähig wird. Der Teleskopförderer 14 schiebt das Fahrgestell 16 in Richtung Laderaum. Während dieses Vorganges korrigiert die Kupplung 22 den Einfahrweg des Fahrgestells 16. Dies geschieht durch über die Steuereinrichtung gesteuertes Ein- und Ausfahren der Teleskopstangen 60 und 62 und damit Verlängerung beziehungsweise Verkürzung der Zug-Druckstangen 46 und 48, wobei die Verlängerung beziehungsweise Verkürzung bei den beiden Zug-Druckstangen 46 und 48 unterschiedlich sein kann. Die Daten für die Steuerung der Teleskopstangen 60 und 62 mittels der Steuereinrichtung (nicht gezeigt) werden aus den kontinuierlich von der Bilderkennungseinrichtung (nicht gezeigt) gelieferten Informationen berechnet. Nachdem die gewünschte Position erreicht ist, werden die aktiven Radbremsen 32 und 34 drucklos und fixieren sie durch die Federn 40 das Fahrgestell 16. Der Be- und Entladeroboter 12 beginnt den automatisierten Ladevorgang. Sofern der Be- und Entladeroboter 12 eine Änderung der Arbeitsposition benötigt, wiederholt sich der Vorgang.

Ist der Laderaum des Transportbehälters 24 komplett entladen, beginnt die Ausfahrt des Fahrgestells 16 aus dem Laderaum. Auch hierbei wird der Weg des Fahrgestells 16 über die Steuereinrichtung gesteuert. Der Entkuppelvorgang geschieht in umgekehrter Reihenfolge wie der Ankuppelvorgang.

Alternativ oder zusätzlich kann die Lenkung des Fahrgestells 16 über das lenkbare Rad 30 erfolgen. Dabei kann die Lenkung mittels einer Nachlaufsteuerung erfolgen. Die Lenkstange (nicht gezeigt) wird beispielsweise durch einen Elektromotor (nicht gezeigt) über ein Getriebe (nicht gezeigt) angetrieben. Die Lenkung wird über Steuersignale des Bildverarbeitungssystems (nicht gezeigt) in der Auslenkung von +90° bis -90° geregelt.

Alternativ zu den Rädern 26, 28 und 30 könnte auch ein Luftkissen vorgesehen sein, auf dem die Plattform 18 ruht bzw. schwebt und das durch ein Gebläse oder einen Kompressor erzeugt wird. Die Führung/Lenkung der Plattform 18 würde durch die Kupplung 22 erfolgen.

Bei der hier gezeigten Kupplung kann anstelle von Horizontal- und/oder Vertikalgelenken auch ein Kugelkopf verwendet werden.

Alternativ zur hier dargestellten Kupplung kann auch eine Seilzugkombination oder eine Kombination aus Zug-Druckstange und/oder Seilzug verwendet werden.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: Vorrichtung zur Be- und Entladung
- 12: Be- und Entladeroboter
- 14: Teleskopförderer
- 16: Fahrgestell
- 18: Plattform
- 20: Gewindebohrungen
- 22: Kupplung
- 24: Transportbehälter
- 26, 28: Räder
- 30: Rad
- 32, 34: aktive Radbremsen
- 36: Bremsscheibe
- 38: Bremszange
- 40: Feder
- 42: Pneumatikzylinder
- 44: Ansatzpunkt
- 46,48: Zug-Druckstangen
- 50: Querstange
- 52, 54: Vertikalgelenke
- 56, 58: Horizontalgelenke
- 60, 62: Teleskopstangen
- 64, 66: Schließstücke
- 68, 70: Kugelknöpfe

## Patentansprüche

1. Vorrichtung (10) zur automatisierten Be- und Entladung eines von wenigstens einer Seite horizontal zugänglichen Transportbehälters (24) mittels eines Be- und Entladeroboters (12), umfassend einen Teleskopförderer (14) und einen mit einem Fahrgestell (16) ausgestatteten und über selbiges mit dem Teleskopförderer (14) gekoppelten Be- und Entladeroboter (12),
**dadurch gekennzeichnet, daß**
das Fahrgestell (16) eine Plattform (18), auf der der Be- und Entladeroboter (12) befestigt ist, aufweist, und der Be- und Entladeroboter (12) über eine lösbare Kupplung (22) zwischen der Plattform (18) und dem Teleskopförderer (14) mit dem Teleskopförderer (14) gekoppelt ist, wobei die Kupplung (22) zwei zueinander parallele Zug-Druckstangen (46, 48), deren jeweiliges eines Ende mit der Plattform (18) lösbar verbunden ist und deren jeweiliges anderes Ende mit einer zu den Zug-Druckstangen (46, 48) quer verlaufenden Querstange (50) verbunden ist, und Halterungen an beiden Seiten des Teleskopförderers (14) zur lösbaren Befestigung beider Enden der Querstange (50) umfaßt und ferner die Zug-Druckstangen (46, 48) jeweils eine über eine Steuereinrichtung steuerbar längenverstellbare Teleskopstange (60 bzw. 62) umfassen.

2. Vorrichtung (10) nach Anspruch 1, **dadurch gekennzeichnet, daß** das Fahrgestell (16) ein über eine Steuereinrichtung steuerbares Bremssystem aufweist.

3. Vorrichtung (10) nach Anspruch 1 oder 2, **dadurch gekennzeichnet, daß** die Plattform (18) eine Grundplatte aufweist, deren Abmessungen und Gewicht so bemessen sind, dass ein Sechsachs-Knickarmroboter bis zu einem Arbeitsgewicht von ca. 60kg bei voller Belastung standsicher in Betrieb ist.

4. Vorrichtung (10) nach Anspruch 3, **dadurch gekennzeichnet, daß** die Grundplatte eine in mindestens einer Richtung verschiebbare Lochplatte ist.

5. Vorrichtung (10) nach Anspruch 3 oder 4, **dadurch gekennzeichnet, daß** die Plattform (18) mit mindestens einem zusätzlichen Gewicht versehen ist.

6. Vorrichtung (10) nach einem der vorangehenden Ansprüche, **dadurch gekennzeichnet, daß** die Plattform (18) mit vier Rädern bestückt ist.

7. Vorrichtung (10) nach einem der Ansprüche 1 bis 5, **dadurch gekennzeichnet, daß** die Plattform (18) mit drei Rädern (26, 28, 30) bestückt ist.

8. Vorrichtung (10) nach Anspruch 6 oder 7, **dadurch gekennzeichnet, daß** mindestens eines der Räder (30) mit einer über die Steuereinrichtung steuerbaren Lenkeinrichtung versehen ist.

9. Vorrichtung (10) nach einem der Ansprüche 6 bis 8, **dadurch gekennzeichnet, daß** mindestens eines der Räder mit einer über die Steuereinrichtung steuerbaren Antriebseinrichtung versehen ist.

10. Vorrichtung (10) nach einem der Ansprüche 6 bis 8, **dadurch gekennzeichnet, daß** das Bremssystem mindestens eine über die Steuereinrichtung steuerbare Bremseinrichtung zum Abbremsen eines der Räder(26, 28) umfaßt.

11. Vorrichtung (10) nach Anspruch 10, **dadurch gekennzeichnet, daß** die Bremseinrichtung eine aktive Radbremse (32, 34) umfaßt.

12. Vorrichtung (10) nach einem der Ansprüche 1 bis 5, **dadurch gekennzeichnet, daß** die Plattform (18) mit Laufketten versehen ist.

13. Vorrichtung (10) nach Anspruch 12, **dadurch gekennzeichnet, daß** mindestens eine der Laufketten mit einer über eine Steuereinrichtung steuerbaren Antriebseinrichtung versehen ist.

14. Vorrichtung (10) nach Anspruch 12, **dadurch gekennzeichnet, daß** das Bremssystem mindestens eine über die Steuereinrichtung steuerbare Bremseinrichtung zum Abbremsen einer der Laufketten umfaßt.

15. Vorrichtung (10) nach einem der vorangehenden Ansprüche, **dadurch gekennzeichnet, daß** die Plattform (18) mit einer über die Steuereinrichtung steuerbaren Ansaugeinrichtung zum Ansaugen der Plattform (18) versehen ist.

16. Vorrichtung (10) nach einem der Ansprüche 3 bis 15, **dadurch gekennzeichnet, daß** der Be- und Entladeroboter (12) mittels einer festen Verschraubung an der Grundplatte befestigt ist.

17. Vorrichtung (10) nach einem der vorangehenden Ansprüche, **dadurch gekennzeichnet, dass** das Bremssystem mindestens einen absenkbaren Stempel umfaßt.

18. Vorrichtung (10) nach einem der Ansprüche 1 bis 16, **dadurch gekennzeichnet, daß** das Bremssystem eine Einrichtung zum Ansaugen der Plattform (18) umfaßt.

19. Vorrichtung (10) nach einem der vorangehenden Ansprüche, **dadurch gekennzeichnet, daß** die Steuereinrichtung durch ein Bildverarbeitungssystem gesteuert ist.

20. Vorrichtung (10) nach einem der vorangehenden Ansprüche, **dadurch gekennzeichnet, daß** die Steuereinrichtung durch mindestens einen Näherungssensor gesteuert ist.

21. Vorrichtung (10) nach einem der vorangehenden Ansprüche, **dadurch gekennzeichnet, daß** die Steuereinrichtung durch ein Kreiselsystem gesteuert ist.

22. Vorrichtung (10) nach einem der vorangehenden Ansprüche, **dadurch gekennzeichnet, daß** die Steuereinrichtung zur Durchführung einer Nachlaufsteuerung ausgebildet ist.

23. Vorrichtung (10) nach einem der vorangehenden Ansprüche, **dadurch gekennzeichnet, daß** eine Verriegelungseinrichtung zur Verriegelung der Querstange (50) in den Halterungen vorgesehen ist.

## Claims

1. Device (10) for automated loading and unloading of a transport container (24), which is accessible horizontally from at least one side, by means of a loading and unloading robot (12), the device comprising a telescopic conveyor (14) and a loading and unloading robot (12) which is equipped with a chassis (16) and is coupled via the same to the telescopic conveyor (14), **characterized in that** the chassis (16) has a platform (18) on which the loading and unloading robot (12) is fastened, and the loading and unloading robot (12) is coupled to the telescopic conveyor (14) via a releaseable coupling (22) between the platform (18) and the telescopic conveyor (14), the coupling (22) comprising two mutually parallel pull-push rods (46, 48), the respective one end of which is connected releasably to the platform (18) and the respective other end of which is connected to a transverse rod (50) running transversely with respect to the pull-push rods (46, 48), and mounts on both sides of the telescopic conveyor (14) for the releasable fastening of both ends of the transverse rod (50), and furthermore the pull-push rods (46, 48) respectively comprising a telescopic rod (60 and 62) which can be adjusted in length in a controllable manner via a control device.

2. Device (10) according to Claim 1, **characterized in that** the chassis (16) has a brake system which can be controlled via a control device.

3. Device (10) according to Claim 1 or 2, **characterized in that** the platform (18) has a baseplate, the dimensions and weight of which are calculated in such a manner that a six-axis bending arm robot is stable in operation under full loading up to a working weight of approx. 60 kg.

4. Device (10) according to Claim 3, **characterized in that** the baseplate is a perforated plate which can be displaced in at least one direction.

5. Device (10) according to Claim 3 or 4, **characterized in that** the platform (18) is provided with at least one additional weight.

6. Device (10) according to one of the preceding claims, **characterized in that** the platform (18) is fitted with four wheels.

7. Device (10) according to one of Claims 1 to 5, **characterized in that** the platform (18) is fitted with three wheels (26, 28, 30).

8. Device (10) according to Claim 6 or 7, **characterized in that** at least one of the wheels (30) is provided with a steering device which can be controlled via the control device.

9. Device (10) according to one of Claim 6 to 8, **characterized in that** at least one of the wheels is provided with a driving device which can be controlled via the control device.

10. Device (10) according to one of Claims 6 to 8, **characterized in that** the brake system comprises at least one brake device, which can be controlled via the control device, for braking one of the wheels (26, 28).

11. Device (10) according to Claim 10, **characterized in that** the brake device comprises an active wheel brake (32, 34).

12. Device (10) according to one of Claims 1 to 5, **characterized in that** the platform (18) is provided with tracks.

13. Device (10) according to Claim 12, **characterized in that** at least one of the tracks is provided with a driving device which can be controlled via a control device.

14. Device (10) according to Claim 12, **characterized in that** the brake system comprises at least one brake device, which can be controlled via the control device, for braking one of the tracks.

15. Device (10) according to one of the preceding claims, **characterized in that** the platform (18) is provided with a suction device, which can be controlled via the control device, for taking up the platform (18) by suction.

16. Device (10) according to one of Claims 3 to 15, **characterized in that** the loading and unloading robot (12) is fastened to the baseplate by means of a fixed screw connection.

17. Device (10) according to one of the preceding claims, **characterized in that** the brake system comprises at least one lowerable ram.

18. Device (10) according to one of Claims 1 to 16, **characterized in that** the brake system comprises a device for taking up the platform (18) by suction.

19. Device (10) according to one of the preceding claims, **characterized in that** the control device is controlled by an image-processing system.

20. Device (10) according to one of the preceding claims, **characterized in that** the control device is controlled by at least one proximity sensor.

21. Device (10) according to one of the preceding claims, **characterized in that** the control device is controlled by a gyroscopic system.

22. Device (10) according to one of the preceding claims, **characterized in that** the control device is designed for carrying out a follow-up control.

23. Device (10) according to one of the preceding claims, **characterized in that** a locking device is provided for locking the transverse rod (50) in the mounts.

## Revendications

1. Dispositif (10) pour le chargement et le déchargement automatisés d'un conteneur de transport (24) accessible horizontalement depuis au moins un côté, à l'aide d'un robot de chargement et de déchargement (12), comprenant un transporteur télescopique (14) et un robot de chargement et de déchargement (12) équipé d'un bâti roulant (16) et couplé par lui-même au transporteur télescopique (14),
**caractérisé en ce que**
le bâti roulant (16) présente une plateforme (18) sur laquelle est fixé le robot de chargement et déchargement (12), et le robot de chargement et de déchargement (12) est couplé au transporteur télescopique (14) par un accouplement (22) désolidarisable, monté entre la plateforme (18) et le transporteur télescopique (14), sachant que l'accouplement (22) présente deux barres de traction-compression (46, 48) parallèles l'une à l'autre, dont chaque fois une première extrémité est reliée de façon désolidarisable à la plateforme (18) et dont chaque fois l'autre extrémité est reliée à une barre transversale (50) s'étendant transversalement par rapport aux barres de traction-compression (46, 48), et comprend en outre des fixations sur les deux côtés du transporteur télescopique (14) pour la fixation désolidarisable des deux extrémités de la barre transversale (50) et, en outre, les barres de traction-compression (46, 48) comprennent chacune une barre télescopique (60 ou 62) réglable en longueur, pouvant être commandée par un dispositif de commande.

2. Dispositif (10) selon la revendication 1, **caractérisé en ce que** le bâti roulant (16) présente un système de freinage pouvant être commandé par un dispositif de commande.

3. Dispositif (10) selon la revendication 1 ou 2, **caractérisé en ce que** la plateforme (18) présente une plaque de base dont les dimensions et le poids sont tels qu'un robot à bras articulé à six axes est d'un fonctionnement sûr jusqu'à un poids de travail d'environ 60 kg à pleine charge.

4. Dispositif (10) selon la revendication 3, **caractérisé en ce que** la plaque de base est une plaque perforée, déplaçable en au moins une direction.

5. Dispositif (10) selon la revendication 3 ou 4, **caractérisé en ce que** la plateforme (18) est munie d'au moins un poids supplémentaire.

6. Dispositif (10) selon l'une des revendications précédentes, **caractérisé en ce que** la plateforme (18) est équipée de quatre roues.

7. Dispositif (10) selon l'une des revendications 1 à 5, **caractérisé en ce que** la plateforme (18) est équipée de trois roues (26, 28, 30).

8. Dispositif (10) selon la revendication 6 ou 7, **caractérisé en ce qu'**au moins l'une des roues (30) est munie d'un dispositif directionnel, pouvant être commandé par le dispositif de commande.

9. Dispositif (10) selon l'une des revendications 6 à 8, **caractérisé en ce qu'**au moins l'une des roues est munie d'un dispositif d'entraînement, pouvant être commandé par le dispositif de commande.

10. Dispositif (10) selon l'une des revendications 6 à 8, **caractérisé en ce que** le système de freinage comprend au moins un dispositif de freinage, pouvant être commandé par le dispositif de commande, pour freiner l'une des roues (26, 28).

11. Dispositif (10) selon la revendication 10, **caractérisé en ce que** le dispositif de freinage comprend un frein de roue actif (32, 34).

12. Dispositif (10) selon l'une des revendications 1 à 5, **caractérisé en ce que** la plateforme (18) est munie de chenilles.

13. Dispositif (10) selon la revendication 12, **caractérisé en ce qu'**au moins l'une des chenilles est munie d'un dispositif d'entraînement pouvant être commandé par un dispositif de commande.

14. Dispositif (10) selon la revendication 12, **caractérisé en ce que** le système de freinage comprend au moins un dispositif de freinage pouvant être commandé par le dispositif de commande, pour freiner l'une des chenilles.

15. Dispositif (10) selon l'une des revendications précédentes, **caractérisé en ce que** la plateforme (18) est munie d'un dispositif d'aspiration pouvant être commandé par le dispositif de commande, pour soumettre la plateforme (18) à une aspiration.

16. Dispositif (10) selon l'une des revendications 3 à 15, **caractérisé en ce que** le robot de chargement et déchargement (12) est fixé sur la plaque de base à l'aide d'un vissage fixe.

17. Dispositif (10) selon l'une des revendications précédentes, **caractérisé en ce que** le système de freinage comprend au moins un poinçon pouvant être abaissé.

18. Dispositif (10) selon l'une des revendications 1 à 16, **caractérisé en ce que** le système de freinage comprend un dispositif pour soumettre la plateforme (18) à une aspiration.

19. Dispositif (10) selon l'une des revendications précédentes, **caractérisé en ce que** le dispositif de commande est commandé par un dispositif de traitement d'image.

20. Dispositif (10) selon l'une des revendications précédentes, **caractérisé en ce que** le dispositif de commande est commandé par au moins un capteur de proximité.

21. Dispositif (10) selon l'une des revendications précédentes, **caractérisé en ce que** le dispositif de commande est commandé par un système gyroscopique.

22. Dispositif (10) selon l'une des revendications précédentes, **caractérisé en ce que** le dispositif de commande est réalisé pour exécuter une commande de poursuite.

23. Dispositif (10) selon l'une des revendications précédentes, **caractérisé en ce qu'**un dispositif de verrouillage est prévu pour verrouiller la barre transversale (50) dans les fixations.
